# FASCICULE DE BREVET EUROPEEN

(11) **EP 0 411 995 B1**
(45) Date de publication et mention de la délivrance du brevet: **22.12.1993**
(21) Numéro de dépôt: 90402165.6
(22) Date de dépôt: 27.07.1990
(51) Int. Cl.: B29C 67/14, B29C 63/02

(54) **Dispositif applicateur pour machine de nappage au moyen de ruban de matière composite**
Auftragskopf für die Auflegung von Verbundwerkstoffbänder
Applicator-head for composite tape laying machine

(30) Priorité: 03.08.1989 FR 8910496
(43) Date de publication de la demande: 06.02.1991
(73) Titulaire: AEROSPATIALE Société Nationale Industrielle, 75781 Paris Cédex 16 (FR)
(72) Inventeur: Poyet, Eric, F-75015 Paris (FR); Mesnage, Didier Robert, F-92210 Saint-Cloud (FR)
(74) Mandataire: Bonnetat, Christian

(56) Documents cités:
- EP-A- 0 204 249
- EP-A- 0 251 964
- US-A- 3 687 781
- US-A- 3 944 458

## Description

La présente invention concerne un dispositif applicateur pour machine de nappage au moyen de ruban de matière composite selon le préambule de la revendication 1. Un tel dispositif applicateur est connu de EP-A-0 204 249.

On connaît déjà, pour la réalisation de pièces de matière composite, telles que des surfaces aérodynamiques d'aéronef (ailes, volets, gouvernes, etc...), une méthode consistant à napper une surface d'application, ou moule, avec un ruban de fibres résistantes (verre, carbone, bore, etc...) imprégnées de résine durcissable. Lorsque le nappage de ruban est terminé, il est ensuite soumis à des opérations connues permettant la polymérisation de ladite résine, de sorte que l'on obtient alors la pièce désirée. L'article "Automated tape laying" de Allen J. Klein, paru dans la revue "ADVANCED COMPOSITES" de Janvier/Février 1989, décrit des machines pour la mise en oeuvre d'une telle méthode.

Pour appliquer le ruban sur la surface d'application, de telles machines utilisent un dispositif applicateur formé généralement par un rouleau rotatif ou un sabot porté par une tête mobile pouvant être déplacée et orientée dans toutes les directions nécessaires à un nappage approprié de la surface d'application.

Afin de pouvoir s'appliquer sur des surfaces d'application convexes et/ou concaves, un tel rouleau rotatif est réalisé de manière à pouvoir se déformer en épousant le profil desdites surfaces. Par exemple, le brevet US-A-4 601 775 décrit un tel rouleau comportant une enveloppe déformable reliée à un arbre rigide par une structure à rotules.

On doit toutefois constater que les autres modes de réalisation connus pour les rouleaux applicateurs de rubans présentent une déformabilité limitée, qui ne permet pas l'application parfaite sur des surfaces très convexes ou très concaves : en effet, si la surface d'application est très convexe, les extrémités du rouleau ne sont pas au contact de ladite surface, tandis que si la surface d'application est très concave, c'est la partie centrale du rouleau qui n'est pas au contact de ladite surface. Dans de tels cas d'application, la seule solution actuellement possible est de réduire la longueur du rouleau applicateur et par conséquent la largeur du ruban appliqué, ce qui augmente le nombre d'applications de lés de ruban et donc le temps de fabrication et le coût des pièces fabriquées.

La présente invention a pour objet de remédier à cet inconvénient, et elle concerne un dispositif comportant un rouleau applicateur épousant parfaitement le profil de la surface d'application, même dans le cas où celle-ci présente de fortes courbures ou une inversion de courbure.

A cette fin, selon l'invention, le dispositif applicateur pour machine de nappage à tête mobile, destinée à napper une surface d'application au moyen d'un ruban de matière composite, ledit dispositif comportant un rouleau rotatif d'application porté par une monture solidaire de ladite tête mobile qui applique ledit rouleau contre ladite surface d'application et qui avance ledit rouleau transversalement à son axe de rotation pour que celui-ci applique en roulant ledit ruban sur ladite surface d'application, est remarquable en ce que :
- ledit rouleau rotatif d'application comporte un arbre souple élastiquement déformable en flexion et un cylindre de matière élastiquement compressible solidaire dudit arbre;
- chaque extrémité dudit arbre est reliée à ladite monture par un palier d'extrémité ; et
- au moins un palier intermédiaire est prévu entre lesdits paliers d'extrémité pour relier ledit arbre à ladite monture.

Ainsi, grâce à une telle structure, ledit rouleau applicateur présente une grande faculté d'adaptation à la forme de la surface d'application, tout en présentant une rigidité suffisante pour résister aux efforts résultant de son roulement sur la surface d'application, alors qu'il est pressé contre celle-ci par ladite tête mobile.

On peut prévoir plusieurs paliers intermédiaires entre les paliers d'extrémité pour maintenir ledit arbre ; toutefois, des essais ont montré que, même pour des rouleaux de longueur importante, par exemple 150 mm, un seul palier intermédiaire médian était suffisant.

Pour accroître la faculté d'adaptation du rouleau applicateur à la forme de la surface d'application, il est avantageux que chacun desdits paliers d'extrémité permette la rotation au moins partielle de l'extrémité correspondante dudit arbre autour d'un axe parallèle à la direction d'avance dudit rouleau. Ainsi, les extrémités dudit arbre peuvent suivre les déformations du reste de l'arbre, celui-ci se déformant donc de façon continue, sur toute sa longueur.

Pour accroître encore plus la faculté d'adaptation du rouleau applicateur à la surface d'application, chaque palier d'extrémité est monté sur un coulisseau pouvant coulisser, par rapport à ladite monture, parallèlement à une direction normale à ladite surface d'application et chacun desdits coulisseaux est pressé en direction de ladite surface d'application par des moyens de pression exerçant une force au moins sensiblement constante sur ledit coulisseau. On est ainsi sûr, de plus, que les extrémités dudit rouleau applicateur sont au contact de la surface d'application.

Avantageusement, on prévoit des butées, de préférence réglables, pour limiter la course desdits coulisseaux, dans les deux sens. On peut ainsi adapter les possibilités de déformation du rouleau au profil de la surface d'application.

Avantageusement, l'action de chaque moyen de pression sur le coulisseau correspondant peut être interrompue, notamment à des fins de positionnement de l'extrémité du ruban sous le rouleau, avant application de ce dernier sur la surface d'application.

Lesdits moyens de pression peuvent être formés par des ressorts ou analogues. Dans un mode avantageux de réalisation, on prévoit de réaliser chacun de ceux-ci sous la forme d'un vérin, par exemple pneumatique, la tige de ce vérin étant susceptible de coopérer avec le coulisseau correspondant. En position rétractée de la tige dudit vérin, on peut faire en sorte qu'il n'y ait aucun contact de celle-ci avec le coulisseau, de sorte que le rouleau présente sa forme spontanée et qu'il est possible de positionner le ruban à la position initiale de nappage sous ledit rouleau. En revanche, en position d'extension de la tige dudit vérin, celle-ci est au contact du coulisseau, de sorte que ledit vérin peut agir alors comme un amortisseur pour l'extrémité de rouleau à laquelle elle est reliée, la position instantanée de la tige dudit vérin résultant de l'amplitude relative des forces antagonistes qui lui sont appliquées, d'une part par le fluide sous pression alimentant ledit vérin, d'autre part par la surface d'application.

De préférence, l'arbre dudit rouleau est réalisé en fibres résistantes (verre, carbone, etc...) enrobées de résine synthétique et le cylindre de matière compressible est formé par enrobage dudit arbre par un élastomère.

Les figures du dessin annexé feront bien comprendre comment l'invention peut être réalisée.

Sur ces figures, des références identiques désignent des éléments semblables.

La figure 1 est une vue en coupe longitudinale schématique d'un mode de réalisation du dispositif applicateur de ruban conforme à la présente invention.

Les figures 2,3 et 4 illustrent, schématiquement en coupe, le comportement du dispositif applicateur de la figure 1, respectivement sur des surfaces d'application concave, convexe et à inversion de courbure.

La figure 5 est une vue en élévation de l'avant, avec arrachement partiel, d'un mode de réalisation pratique du dispositif applicateur de l'invention.

La figure 6 est une vue, moitié en élévation de l'arrière, moitié en coupe longitudinale selon la ligne VI-VI de la figure 7, du dispositif applicateur de la figure 5.

Les figures 7,8 et 9 sont respectivement des coupes suivant les lignes VII-VII, VIII-VIII et IX-IX de la figure 6.

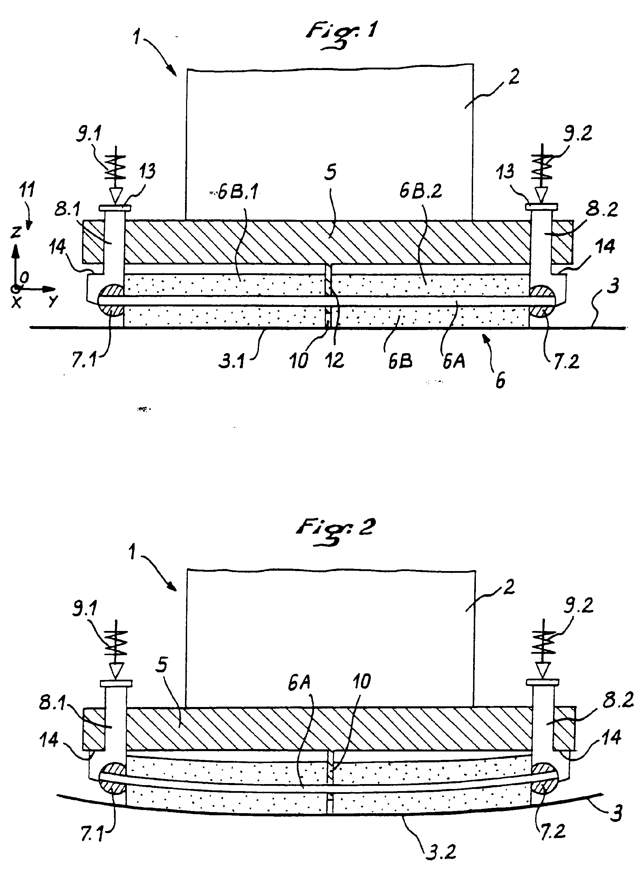

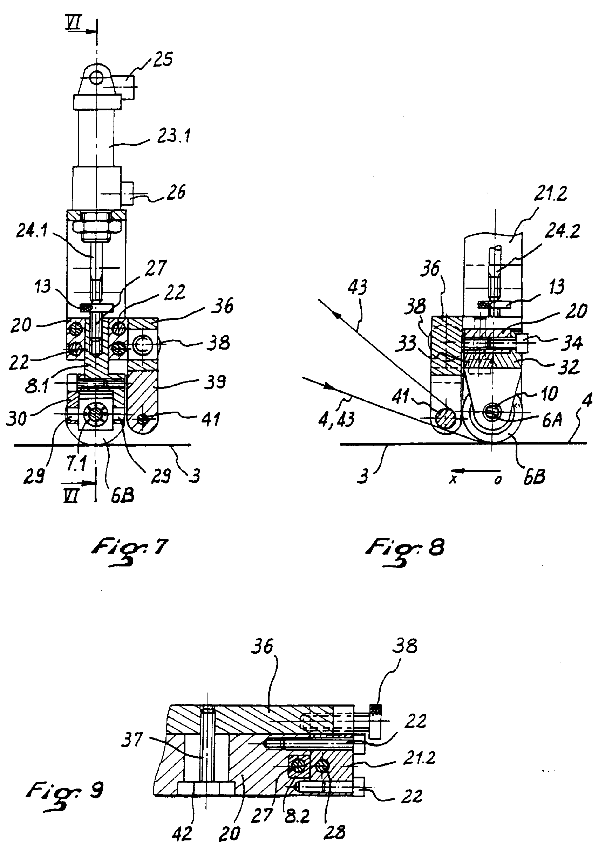

Le dispositif 1 applicateur de ruban, montré par la figure 1, est monté sur la tête mobile 2 (représentée seulement de manière schématique) d'une machine de nappage (non représentée) destinée à napper une surface d'application 3 au moyen d'un ruban de matière composite 4 (seulement visible sur la figure 8) . Cette machine de nappage et sa tête mobile 2 peuvent être semblables à celles décrites dans l'article "Automated tape laying" mentionné ci-dessus, ou bien peuvent être de type différent.

Le dispositif applicateur 1 comporte une monture 5 fixée à ladite tête mobile 2, de toute façon appropriée et non représentée, et portant un rouleau rotatif 6. Ce rouleau rotatif 6 est constitué d'un arbre 6A élastiquement déformable en flexion et d'une grande souplesse, et d'un enrobage cylindrique souple 6B de matière élastiquement compressible. Par exemple, l'arbre 6A est réalisé en fibres de verre enrobées de résine de façon à présenter, outre une grande souplesse élastique, une bonne résistance à la fatigue, tandis que l'enrobage cylindrique 6B est en élastomère (par exemple en silicone).

Chaque extrémité de l'arbre 6A est montée dans un palier d'extrémité 7.1 et 7.2 respectivement, lui-même monté dans un coulisseau 8.1 ou 8.2, pouvant coulisser par rapport à la monture 5.

Des moyens de pression 9.1, 9.2 pressent lesdits coulisseaux 8.1 et 8.2 avec une force au moins sensiblement constante.

La partie médiane de l'arbre 6A est maintenue dans un palier fixe 10, solidaire de la monture 5.

Comme l'illustre le système d'axes 11 représenté sur la gauche de la figure 1, la tête mobile 2 communique au rouleau rotatif 6, par l'intermédiaire de la monture 5, une pression d'application sur la surface 3 parallèle à une direction OZ, orthogonale à ladite surface d'application 3 et perpendiculaire à l'arbre 6A, qui est parallèle à une direction OY. Cette tête mobile 2 déplace l'ensemble de la monture 5 et du rouleau rotatif 6 de façon que ledit rouleau rotatif 6 roule sur la surface d'application 3 en se déplaçant suivant la direction OX, perpendiculaire à OZ et OY. Sur la figure 1, la direction OX est perpendiculaire au plan du dessin.

Les paliers 7.1 et 7.2, par exemple du type à pivot, permettent aux extrémités de l'arbre 6A de se déformer autour de la direction OX. Les coulisseaux 8.1 et 8.2 sont mobiles parallèlement à la direction OZ et la force qui leur est appliquée par les moyens de pression 9.1 et 9.2 est également parallèle à cette direction OZ. De préférence, lesdits moyens de pression 9.1 et 9.2 sont commandables de façon qu'ils n'appliquent leur pression aux coulisseaux 8.1 et 8.2 que lorsque le rouleau 6 est en appui contre la surface d'application 3. De la sorte, le rouleau 6 garde une position neutre rectiligne spontanée, lorsqu'il n'est pas appliqué contre la surface 3, ce qui facilite l'opération de positionnement initiale du ruban 4 sous le rouleau 6, préalable à une séquence de nappage.

On remarquera que le palier fixe 10 empêche la partie médiane de l'arbre 6A de se déplacer parallèlement à la direction OX pendant une opération de nappage. La présence d'un tel palier fixe médian 10 oblige à réaliser l'enrobage cylindrique souple 6B en deux parties 6B.1 et 6B.2 séparées l'une de l'autre par une fente 12. Cette fente 12 n'est pas préjudiciable à la qualité de l'application du ruban, car elle est comblée par l'écrasement des parties 6B.1 et 6B.2 lors de l'application du rouleau 6 contre la surface d'application 3.

Des butées 13, portées par les coulisseaux 8.1 et 8.2 et susceptibles de coopérer avec la monture 5, limitent la course desdits coulisseaux (parallèlement à la direction OZ) en direction de la surface d'application 3. D'autres butées 14, également portées par les coulisseaux 8.1 et 8.2 et susceptibles de coopérer avec la monture 5, limitent la course desdits coulisseaux en sens opposé à la surface d'application 3.

On conçoit aisément que, grâce à la structure décrite et représentée, le rouleau 6 présente une grande souplesse de déformation dans le plan YOZ, de sorte qu'il peut s'adapter au profil de la surface d'application 3, tout en ayant une grande rigidité dans le plan XOY, de sorte qu'il est insensible aux efforts (parallèles à OX) auxquels il est soumis lorsque la tête mobile 2 le déplace en le pressant contre la surface d'application 3.

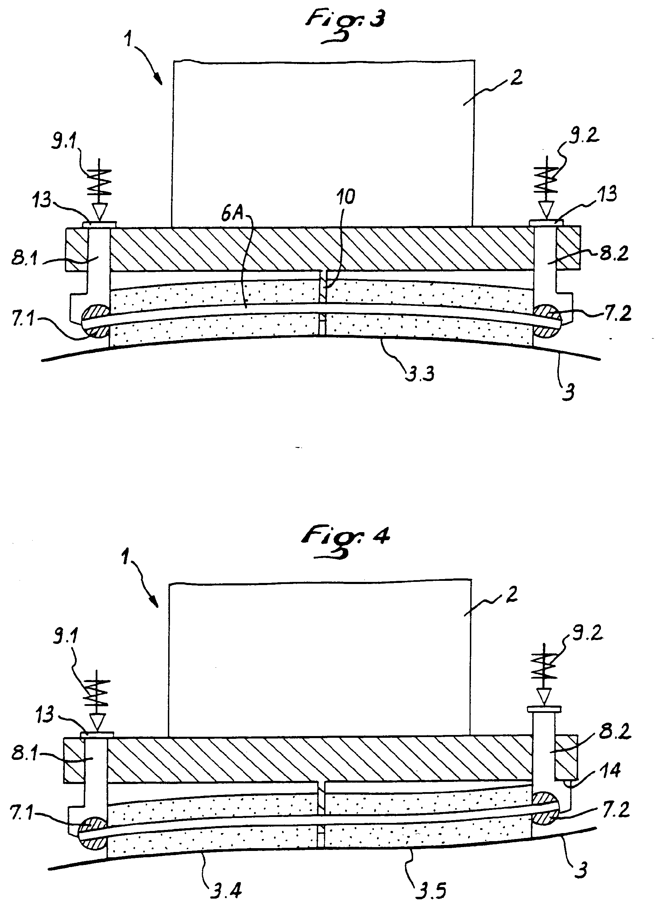

Sur la figure 1, on a représenté le dispositif applicateur 1 en appui contre une partie plane 3.1 de la surface d'application 3. On voit dans ce cas que l'arbre 6A est rectiligne et que les coulisseaux 8.1 et 8.2 se trouvent dans une position intermédiaire pour laquelle les butées 13 et 14 sont écartées de la monture 5. Sur cette figure 1, ainsi d'ailleurs que sur les figures 2 à 4, la fente 12 entre les parties 6B.1 et 6B.2 du rouleau 6B a été représentée, bien qu'elle soit en réalité comblée par suite de l'écrasement dudit rouleau.

La figure 2 illustre schématiquement l'application du dispositif 1 sur une partie concave 3.2 de la surface d'application 3. Dans ce cas, l'arbre 6A se déforme, de part et d'autre du palier médian fixe 10, pour suivre la concavité de la partie 3.2. Cette déformation de l'arbre 6A est favorisée du fait que les paliers 7.1 et 7.2 tournent spontanément pour permettre la déformation des extrémités dudit arbre 6A, par rotation partielle de sens approprié autour de l'axe de direction OX. Si, comme cela est représenté sur la figure 2, la concavité de la partie 3.2 est forte, les coulisseaux 8.1 et 8.2 sont, par la réaction de la surface 3 sur le rouleau 6, repoussés à l'encontre de l'action des moyens de pression 9.1 et 9.2, jusqu'à ce que les butées 14 viennent en appui contre la monture 5.

Lorsque, comme cela est représenté sur la figure 3, le dispositif 1 est applique sur une partie convexe 3.3 de la surface d'application 3, l'arbre 6A se déforme dans le sens inverse de celui représenté sur la figure 2, pour suivre la convexité de cette partie 3.3. Là encore, la déformation de l'arbre 6A se fait de part et d'autre du-palier fixe 10 et est favorisée par la rotation adéquate et spontanée des paliers 7.1 et 7.2 autour de la direction OX. Si la convexité de la partie 3.3 de surface 3 est importante (cas représenté sur la figure), les coulisseaux 8.1 et 8.2 sont repoussés par les moyens de pression 9.1 et 9.2, jusqu'à ce que les butées 13 viennent en appui contre la monture 5.

De plus, comme cela est représenté sur la figure 4, si la surface d'application 3 présente une inversion de courbure de façon à comporter une partie convexe 3.4 (à gauche) raccordée à une partie concave 3.5 (à droite) et si le dispositif 1 est appliqué à cheval sur cette inversion de courbure, le rouleau 6 de ce dispositif peut se déformer de façon à s'adapter à cette inversion de courbure. La partie de l'arbre 6A se trouvant à l'aplomb de la partie convexe 3.4 s'adapte à la convexité de celle-ci de la façon illustrée par la figure 3, tandis que la partie de l'arbre 6A se trouvant à l'aplomb de la partie concave 3.5 s'adapte à la concavité de ladite partie de la façon illustrée sur la figure 2. Cette double déformation de sens contraires est favorisée par le déplacement approprié des coulisseaux 8.1 et 8.2 et par la rotation adéquate des paliers 7.1 et 7.2. Comme précédemment, si la convexité de la partie 3.4 et la concavité de la partie 3.5 sont importantes, la butée 13 du coulisseau 8.1 et la butée 14 du coulisseau 8.2 permettent de venir au contact de la monture 5.

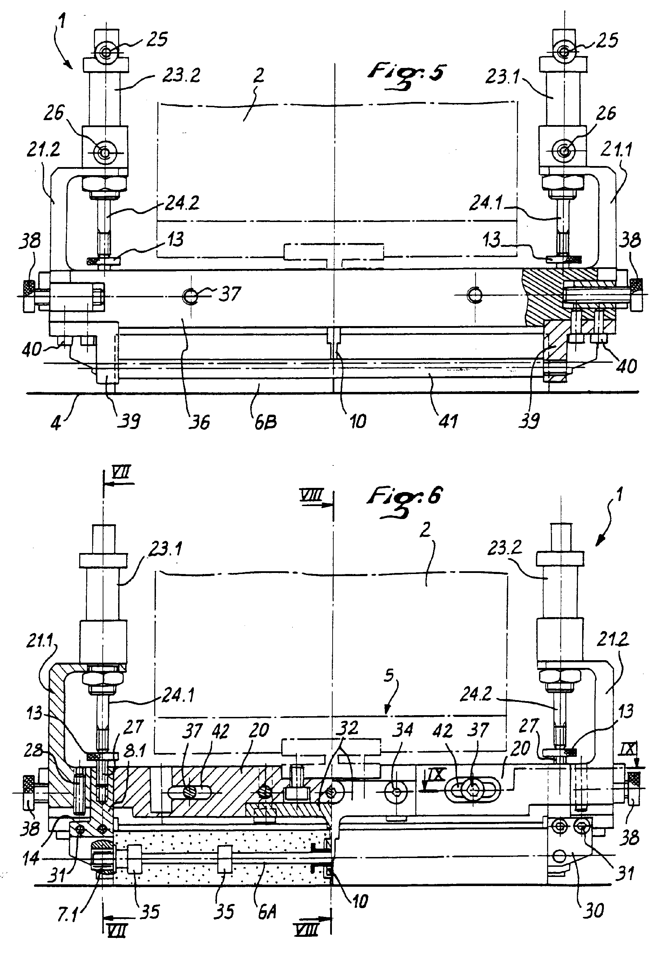

Dans le mode de réalisation du dispositif applicateur 1 montré par les figures 5 à 9, la monture 5 comporte un barreau 20 aux extrémités duquel sont fixées deux colonnes 21.1 et 21.2, au moyen de vis 22. Chaque colonne 21.1 et 21.2 sert de support à un vérin pneumatique 23.1, 23.2, formant respectivement les moyens de pression 9.1 et 9.2. Chaque vérin 23.1, 23.2 comporte une tige 24.1, 24.2 pouvant occuper soit une position de rétraction (non représentée sur les figures), soit une position d'extension (représentée sur les figures), sous l'action d'air comprimé introduit dans des orifices de commande 26 ou 25.

Les coulisseaux 8.1 et 8.2 présentent une section polygonale (carrée sur les figures) et peuvent coulisser à frottement doux dans un guidage de section correspondante prévu dans ledit barreau 20 et les colonnes 21.1 et 21.2. Les butées 13 sont formées par la tête de vis 27 susceptible d'être vissée et dévissée dans le coulisseau 8.1 ou 8.2, correspondant. Ainsi, les vis 27 permettent de former un système de butée variable situé entre le coulisseau 8.1 (ou 8.2) et la tige de vérin correspondante 24.1 ou (24.2). Par ailleurs, des vis 28 sont prévues dans les colonnes 21.1 et 21.2 pour former, avec les butées 14 des coulisseaux 8.1 et 8.2, un système de butée réglable. Par suite, par réglage de la position des vis 27 et 28, il est possible de régler la longueur de la course des coulisseaux 8.1 et 8.2, dans les deux sens.

Les paliers à pivot 7.1 et 7.2, pour les extrémités de l'arbre 6A, sont fixés dans des logements desdits coulisseaux 8.1 et 8.2, par l'intermédiaire de tétons 29, lesdits logements étant obturés par des couvercles 30 fixés par des vis 31.

Le palier intermédiaire médian 10 est formé entre deux pièces 32 et 33, fixées au barreau 20 par des vis 34.

L'arbre 6A porte des bagues 35 destinées à renforcer la liaison entre ledit arbre 6A et le cylindre 6B de matière élastiquement compressible.

De plus, le long du barreau 20, devant celui-ci par rapport au sens d'avance du dispositif applicateur, est fixée une barrette 36, au moyen de vis 37 de serrage pouvant coulisser grâce à des lumières 42 prévues dans ledit barreau 20. La position de la barrette 36 par rapport au barreau 20 est réglable longitudinalement (c'est-à-dire transversalement au ruban à napper) grâce à des vis de réglage 38. A ses extrémités, la barrette 36 porte des paliers 39 fixés à celle-ci par des vis 40. Entre les paliers 39 de la barrette 36 est monté un arbre rotatif 41 pour une pellicule de protection 43 recouvrant le ruban 4.

Ainsi, les vérins 23.1 et 23.2 étant commandés pour que leurs tiges 24.1 et 24.2 se trouvent en position de rétraction, la tête 2 amène le dispositif applicateur au-dessus de l'emplacement de référence de la surface 3 auquel doit être commence le nappage. Le ruban, provenant d'une bobine (non représentée), est séparé ou non de sa pellicule de protection 43, qui est passée sur l'arbre rotatif 41 pour être enroulée sur une bobine (non représentée). Le ruban 4, débarrassé de sa pellicule de protection 4, est appliqué sur la surface d'application 3 par le rouleau 6B, grâce à l'action de la tête 2. Ensuite, les vérins 23.1 et 23.2 sont commandés pour que leurs tiges 24.1 et 24.2 passent en position d'extension pressant les coulisseaux 8.1 et 8.2 en direction de la surface d'application 3. Le dispositif applicateur 1 est alors prêt pour que le nappage s'effectue automatiquement, comme décrit dans l'article "Automated tape laying" précité.

## Revendications

1. Dispositif applicateur pour machine de nappage à tête mobile (2), destinée à napper une surface d'application (3) au moyen d'un ruban (4) de matière composite, ledit dispositif comportant un rouleau rotatif d'application (6) porté par une monture (5) solidaire de ladite tête mobile qui applique ledit rouleau contre ladite surface d'application et qui avance ledit rouleau transversalement à son axe de rotation pour que celui-ci applique en roulant ledit ruban sur ladite surface d'application,
caractérisé en ce que :
- ledit rouleau rotatif d'application (6) comporte un arbre souple (6A) élastiquement déformable en flexion et un cylindre (6B) de matière élastiquement compressible solidaire dudit arbre ;
- chaque extrémité dudit arbre est reliée à ladite monture (5) par un palier d'extrémité (7.1, 7.2) ; et
- au moins un palier intermédiaire (10) est prévu entre lesdits paliers d'extrémité (7.1, 7.2) pour relier ledit arbre (6) à ladite monture (5).

2. Dispositif selon la revendication 1,
caractérisé en ce que chacun desdits paliers d'extrémité (7.1,7.2) permet la déformation en rotation de l'extrémité correspondante dudit arbre autour d'un axe (OX) parallèle à la direction d'avance dudit rouleau (6).

3. Dispositif selon l'une quelconque des revendications 1 ou 2,
caractérisé en ce que chaque palier d'extrémité (7.1,7.2) est monté sur un coulisseau (8.1,8.2) pouvant coulisser, par rapport à ladite monture (5), parallèlement à une direction (OZ) normale à ladite surface d'application (3) et en ce que chacun desdits coulisseaux (8.1,8.2) est pressé en direction de ladite surface d'application (3) par des moyens de pression (9.1,9.2) exerçant une force au moins sensiblement constante sur ledit coulisseau.

4. Dispositif selon la revendication 3,
caractérisé en ce qu'il comporte des butées (13,14), de préférence réglables, pour limiter la course desdits coulisseaux dans les deux sens.

5. Dispositif selon l'une des revendications 3 ou 4,
caractérisé en ce que l'action de chaque moyen de pression sur le coulisseau correspondant peut être interrompue.

6. Dispositif selon l'une des revendications 3 à 5,
caractérisé en ce que chaque moyen de pression est un vérin.

7. Dispositif selon l'une des revendications 1 à 6,
caractérisé en ce que l'arbre (6A) dudit rouleau (6) est réalisé en fibres résistant es enrobées de résine synthétique.

8. Dispositif selon la revendication 7,
caractérisé en ce que ledit cylindre (6B) de matière compressible est formé par enrobage dudit arbre (6A) par un élastomère.

9. Dispositif selon la revendication 2,
caractérisé en ce que lesdits paliers d'extrémité (7.1,7.2) sont du type à pivot.

## Patentansprüche

1. Auftragvorrichtung für eine Bedeckungsmaschine mit einem beweglichen Kopf (2), zum Bedecken einer Auftragfläche (3) mit einem Band (4) aus Verbundmaterial, wobei die besagte Vorrichtung eine rotierende Auftragsrolle (6) enthält, die von einem mit dem besagten beweglichen Kopf fest verbundenen Träger (5) getragen wird, welcher die besagte Rolle gegen die Auftragsfläche drückt und die besagte Rolle quer zu ihrer Drehachse vorwärts bewegt, damit diese beim Rollen das besagte Band auf die besagte Auftragsfläche drückt,
dadurch gekennzeichnet, daß
- die besagte rotierende Auftragrolle (6) eine flexible in der Biegung verformbare Welle (6A) und einen mit der Welle fest verbundenen aus einem elastisch komprimierbarem Material bestehenden Zylinder (6B) enthält;
- jedes Ende der besagten Welle mit dem besagten Träger (5) über ein Endlager (7.1, 7.2) verbunden ist, und
- mindestens ein Zwischenlager (10) zwischen den besagten Endlagern (7.1, 7.2) vorgesehen ist, um die besagte Welle (6) mit dem besagten Träger (5) zu verbinden.

2. Vorrichtung nach dem Anspruch 1,
dadurch gekennzeichnet, daß jedes der besagten Endlager (7.1, 7.2) die Verformung in der Drehung des entsprechenden Endes der besagten Welle um eine der Vorschubrichtung der besagten Rolle (6) parallelen Achse (OX) gestattet.

3. Vorrichtung nach irgendeinem der Ansprüche 1 oder 2,
dadurch gekennzeichnet, daß jedes Endlager (7.1, 7.2) auf einem Gleitstück (8.1, 8.2) montiert ist, welches sich in Bezug auf den besagten Träger (5) parallel zu einer zur besagten Auftragsfläche (3) normalen Richtung (OZ) verschieben kann und daß jedes der besagten Gleitstücke (8.1, 8.2) durch Druckmittel (9.1, 9.2), welche eine merklich konstante Kraft auf das besagte Gleitstück ausüben, in Richtung der besagten Auftragsfläche (3) gedrückt wird.

4. Vorrichtung nach dem Anspruch 3,
dadurch gekennzeichnet, daß sie Anschläge (13, 14), vorzugsweise einstellbar, aufweist, um den Laufweg in beiden Richtungen der besagten Gleitstücke zu begrenzen.

5. Vorrichtung nach einem der Ansprüche 3 oder 4,
dadurch gekennzeichnet, daß die Wirkung jedes Druckmittels auf das entsprechende Gleitstück unterbrochen werden kann.

6. Vorrichtung nach einem der Ansprüche 3 bis 5,
dadurch gekennzeichnet, daß jedes Druckmittel aus einem Zylinder besteht.

7. Vorrichtung nach einem der Ansprüche 1 bis 6,
dadurch gekennzeichnet, daß die Welle (6A) der besagten Rolle (6) aus mit Kunstharz umhüllten, widerstandsfähigen Fasern besteht.

8. Vorrichtung nach dem Anspruch 7,
dadurch gekennzeichnet, das der besagte Zylinder (6B) aus komprimierbarem Material durch Umhüllung der besagten Welle (6A) mit einem Elastomer gebildet ist.

9. Vorrichtung nach dem Anspruch 2,
dadurch gekennzeichnet, daß die besagten Endlager (7.1, 7.2) Drehzapfenlager sind.

## Claims

1. Applicator device for a tape-laying machine with a moveable head (2), intended to lay a tape (4) of composite material onto an application surface (3), the said device comprising a rotary application roller (6) carried by a mounting (5) integral with the said moveable head which applies the said roller against the said application surface and which advances the said roller transversely to its axis of rotation so that, as it rolls, the roller applies the said tape to the said application surface, characterised in that:
- the said rotary application roller (6) comprises a flexible shaft (6A) which can flex elastically, and a cylinder (6B) made of elastically compressible material and integral with the said shaft;
- each end of the said shaft is connected to the said mounting (5) by an end bearing (7.1, 7.2); and
- at least one intermediate bearing (10) is provided between the said end bearings (7.1, 7.2) to connect the said shaft (6) to the said mounting (5).

2. Device according to Claim 1, characterised in that each of the said end bearings (7.1,7.2) permits the deformation in rotation of the corresponding end of the said shaft about an axis (OX) parallel to the direction of advance of the said roller (6).

3. Device according to either of Claims 1 and 2, characterised in that each end bearing (7.1, 7.2) is mounted on a slide (8.1, 8.2) which can slide, relative to the said mounting (5), parallel to a direction (OZ) perpendicular to the said application surface (3), and in that each of the said slides (8.1, 8.2) is pressed towards the said application surface (3) by pressing means (9.1, 9.2) which exert an at least substantially constant force on the said slide.

4. Device according to Claim 3, characterised in that it comprises stops (13, 14), which are preferably adjustable, for limiting the travel of the said slides in both directions.

5. Device according to one of Claims 3 and 4, characterised in that the action of each pressing means on the corresponding slide may be interrupted.

6. Device according to one of Claims 3 to 5, characterised in that each pressing means is an actuator.

7. Device according to one of Claims 1 to 6, characterised in that the shaft (6A) of the said roller (6) is made from resistant fibres coated with synthetic resin.

8. Device according to Claim 7, characterised in that the said cylinder (6B) made of compressible material is formed by coating the said shaft (6A) with an elastomer.

9. Device according to Claim 2, characterised in that the said end bearings (7.1, 7.2) are of the pivot type.
